Europäisches Patentamt

**European Patent Office**

**Office européen des brevets**

(11) Numéro de publication: **0 319 530 B1**

(12) **FASCICULE DE BREVET EUROPEEN**

(45) Date de publication de fascicule du brevet: **30.12.92**

(51) Int. Cl.⁵: **G11B 15/665**, G11B 15/61, G11B 15/29, G11B 21/00

(21) Numéro de dépôt: **87903229.0**

(22) Date de dépôt: **22.05.87**

(86) Numéro de dépôt internationale :
**PCT/CH87/00057**

(87) Numéro de publication internationale :
**WO 88/09550 (01.12.88 88/26)**

(54) **DISPOSITIF D'ENREGISTREMENT MAGNETIOUE OU AUTRE A UNE OU PLUSIEURS TETES GRAVEUSES TOURNANTES.**

(43) Date de publication de la demande:
**14.06.89 Bulletin 89/24**

(45) Mention de la délivrance du brevet:
**30.12.92 Bulletin 92/53**

(84) Etats contractants désignés:
**CH DE FR GB IT LI NL**

(73) Titulaire: **KUDELSKI SA Fabrique d'enregis-
treurs Nagra
Route de Genève 22
CH-1033 Cheseaux(CH)**

(72) Inventeur: **KUDELSKI, Stefan
Ch. de la Croix
CH-1052 Le Mont sur Lausanne(CH)**
Inventeur: **SCHLUP, Jean-Claude
Ch. du Colombier 10
CH-1053 Cugy(CH)**
Inventeur: **ROSSELET, Ernest
CH-1049
Assens(CH)**

(74) Mandataire: **Steiner, Martin et al
c/o AMMANN INGENIEURS-CONSEILS EN
PROPRIETE INTELLECTUELLE SA BERNE
Schwarztorstrasse 31
CH-3001 Bern(CH)**

Rank Xerox (UK) Business Services

(56) Documents cités:

| | |
|---|---|
| EP-A- 0 115 275 | EP-A- 0 180 489 |
| DE-A- 3 045 543 | DE-A- 3 118 241 |
| DE-A- 3 127 340 | FR-A- 2 130 346 |
| FR-A- 2 276 653 | FR-A- 2 345 035 |
| FR-A- 2 384 318 | FR-A- 2 407 547 |
| FR-A- 2 445 585 | FR-A- 2 477 748 |
| GB-A- 2 020 878 | GB-A- 2 020 879 |
| GB-A- 2 054 940 | GB-A- 2 078 431 |
| GB-A- 2 155 685 | US-A- 3 673 348 |
| US-A- 3 691 315 | US-A- 3 697 676 |
| US-A- 3 700 152 | US-A- 3 770 906 |
| US-A- 3 911 490 | US-A- 3 943 566 |
| US-A- 4 138 699 | US-A- 4 215 379 |
| US-A- 4 255 768 | |

IBM Technical Disclosure Bulletin, vol. 9, no. 8, January 1967 (New York, US), R. B. Johnson et al.: "Automatic tape threading", page 968, see page 968; figs.

Patent Abstracts of Japan, vol. 7, no. 164 (P-211)(1309), 19 July 1983

Patent Abstracts of Japan, vol. 3, no. 124 (E-144), 17 October 1979

Proceedings of the Conference on Video and Date Recording, IERE Conference Proceedings, No. 43, 24-27 July 1979, J. C. Mallinson: "Towards 1000 mega-bit per second magnetic recording", pages 267-274, see pages 268, 271; figs.

## Description

### DOMAINE TECHNIQUE

La présente invention concerne un dispositif d'enregistrement magnétique ou autre à tête ou têtes tournantes, à balayage hélicoidal.

### TECHNIQUE ANTERIEURE

L'enregistrement de données, qu'elles soient analogiques ou numériques, s'effectue presque toujours dans une très faible épaisseur d'une couche déposée sur un support sous forme de film flexible. Ceci est le cas, par exemple de l'écriture sur papier, de l'enregistrement photographique et surtout de l'enregistrement magnétique.

L'enregistrement magnétique analogique du son exige une vitesse relative entre tête et ruban assez faible. Par contre, le rapport signal sur bruit de l'enregistrement étant proportionnel à la surface utilisée du ruban, la piste enregistrée doit être assez large. C'est la raison pour laquelle, dans le procédé habituel, on fait défiler le ruban devant une tête magnétique stationnaire.

Pour l'enregistrement analogique d'un signal vidéo ou de tout enregistrement numérique, le rapport signal sur bruit est moins critique, ce qui permet de réduire fortement la largeur de la piste enregistrée. Par contre, le nombre des transitions magnétiques par seconde étant très élevé, il faut créer une grande vitesse relative entre tête et ruban. Par exemple, l' enregistrement analogique professionnel du son se fait généralement à 19,05 ou 38,1 cm par seconde, sur une largeur de 2 à 6 mm, tandis que l'enregistrement analogique professionnel d'un signal vidéo (format C) se fait à une vitesse relative entre tête et ruban de 25 m par seconde, mais sur une largeur de 0,16 mm seulement. Un ruban si étroit et défilant à une si grande vitesse n'est pas pratique, de sorte que, depuis les années 1950, la solution universellement adoptée pour l'enregistrement des signaux vidéo utilise des têtes mobiles, en pratique tournantes, qui balayent la surface du ruban magnétique.

A l'origine, ce balayage se faisait en travers, l'axe de rotation de la tête tournante ou scanner étant parallèle à la direction de défilement du ruban (format Quadruplex). Aujourd'hui, presque tous les nouveaux appareils d'enregistrement utilisent le balayage hélicoidal: Le ruban défile en hélice autour d'un cylindre dont une partie est généralement fixe et une autre tournante. Cette partie tournante comporte une ou plusieurs têtes magnétiques qui, par suite de l'enroulement hélicoidal du ruban, balayent la surface de celui-ci en diagonale. Le mouvement longitudinal du ruban a pour effet que les pistes enregistrées ne sont pas superposées, mais qu'elles se suivent à la façon des hachures d'un dessin.

Dans les appareils actuellement connus, le ruban est entraîné par la bobine réceptrice du ruban et par un cabestan sous forme d'un cylindre tournant, généralement à vitesse constante. Entre ces organes et le scanner, on trouve divers éléments tels que des têtes magnétiques destinées aux pistes longitudinales auxiliaires, une roulette de comptage mesurant l'avance longitudinale du ruban et divers guides de ruban dont les guides d'entrée et de sortie du scanner. Ces derniers guides sont généralement fixes, mais dans certains cas (Ampex Nagra VPR 5), ces guides sont tournants.

Dans le cas d'enregistrements à vitesse variable, notamment à des vitesses inférieures à la vitesse nominale, il est nécessaire de corriger l'erreur d'angle des pistes enregistrées sur le ruban.

La demande de brevet publiée DE-A-30 45 543 concerne un procédé de reproduction de signaux vidéo enregistrés sur des pistes. Pour permettre la lecture des informations mémorisées sur une bande magnétique dans le cas d'une vitesse de défilement de la bande différente (plus élevée) que celle de l'enregistrement, il est toutefois nécessaire d'utiliser une tête magnétique supplémentaire qui restitue les signaux manquants. On connaît aussi de la demande brevet publiée EP-A-0 115 275 un dispositif pour assurer que le balayage des pistes enregistrées soit correct en cas de vitesses de défilement de la bande autres que nominale. Le guidage de la bande dans le domaine d'un tambour supérieur est effectué de manière qu'elle soit tenue en trois points. Ceci permet d'ajuster des angles quelconques de l'hélice et en conséquence de corriger le parcours des têtes sur la bande. Une telle constuction ne fait pas appel à une déformation élastique de la fixation du tambour. On connait encore du document GB-A-2 155 685 un appareil de reproduction de signaux enregistrés sur une bande magnétique, comportant un tambour rotatif et un tampbour fixe. Cet ensemble est monté de manière pivotante à l'aide d'un premier mécanisme. Un second mécanisme est prévu pour varier l'angle d'inclinaison de l'enemble des deux tambours dans le cas où la vitesse de défilement de la bande est supérieure à la vitesse de défilement normale. Cependant, dans ce dispositif, le tambour fixe ne comporte pas de rampe hélicoidale pour guider la bande et il n'est pas prévu de moyens pour déformer élastiquement la fixation du tambour fixe, afin de varier l'angle d'inclinaison du tambour.

### EXPOSE DE L'INVENTION

Le but de la présente invention est de réaliser un enregistreur permettant d'enregistrer à vitesse variable, notamment plus faible que la vitesse nominale.

Pour atteindre ce but, il est nécessaire de corriger l'erreur d'angle des pistes enregistrées sur le ruban due à la modification de la vitesse longitudinale du ruban. Cette correction est réalisée dans le dispositif faisant l'objet de la présente invention tel que défini dans la revendication 1, par le réglage de l'angle de l'hélice d'une rampe ou guide de ruban hélicoidal à géométrie variable situé dans la partie fixe du scanner.

## DESCRIPTION SOMMAIRE DES DESSINS

La figure 1     montre la position de travail des cabestans au voisinage immédiat du scanner,

La figure 2     montre le scanner avec la rampe hélicoidale,

La figure 3     montre la face enregistrée d'un ruban par des têtes tournantes,

La figure 4     montre les pistes d'enregistrement dans le cas d'une vitesse de défilement du ruban réduite de moitié,

La figure 5     montre les pistes d'enregistrement dans le cas d'une vitesse de défilement du ruban égale au 1/4 de la vitesse nominale, et

La figure 6     montre le déplacement axial des têtes d'enregistrement sur le scanner pour de petites vitesses de défilement du ruban.

## MANIERES DE REALISER L'INVENTION

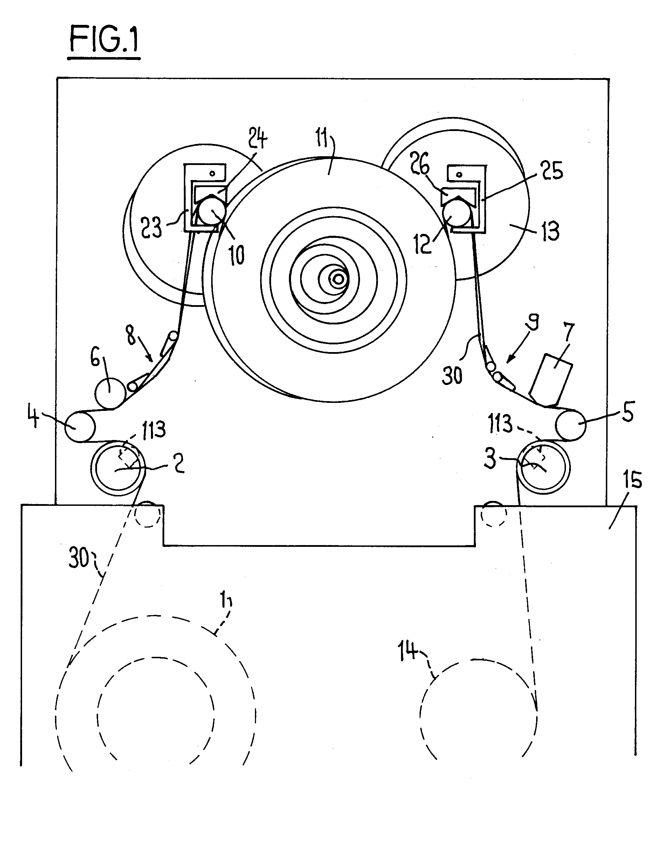

La figure 1 montre l'enregistreur avec les cabestans en position de travail. L'enregistreur comprend un premier cabestan-guide d'entrée 10 et un second cabestan-guide de sortie 12. Le ruban 30 sort de la cassette 15 par la bobine débitrice de cassette 1 et est reçu dans la bobine réceptrice de cassette 14. En dehors de la cassette 15, le ruban passe sur des guides 2 et 3 qui contiennent aussi les têtes magnétiques pour les pistes longitudinales auxiliaires qui doivent pouvoir opérer lorsque le ruban n'est pas engagé sur le scanner, par exemple durant les bobinages rapides. Le ruban passe ensuite sur des tensiomètres 4 et 5 qui sont des poulies montées sur des bras pivotants pour tendre le ruban et en mesurer la tension afin d'informer les circuits d'asservissement de la tension du ruban. Le ruban se déplace ensuite devant les têtes magnétiques principales 6 et 7 pour l'effacement, l'enregistrement ou la lecture des pistes longitudinales. 8 et 9 représentent des guides non tournants de forme complexe permettant le changement de plan. Le ruban dans la cassette et sur les éléments 2 à 7 se déplace parallèlement à la base de l'appareil. Par contre, depuis les guides 8 et 9, il descend d'un côté et monte de l'autre pour se raccorder à l'hélice du scanner. Les guides 8 et 9 assurent une tension constante aussi bien vers le haut que vers le bas du ruban. Ces guides peuvent consister chacun en deux cylindres gauches. Entre les deux cabestans 10 et 12, le ruban passe sur le tambour tournant 11 du scanner qui peut comprendre une pluralité de têtes magnétiques. 13 représente un moteur encodeur du cabestan de sortie 12.

Dans les enregistreurs à scanner hélicoidal, il se pose le problème de garantir que, lors d'une lecture ultérieure, la tête lectrice passe exactement sur les traces enregistrées auparavant. Pour cela, il est judicieux de guider le ruban latéralement lors de son passage sur le scanner. Une méthode universellement utilisée consiste à munir le tambour non tournant du scanner d'un guide hélicoidal appelé "rampe" sur lequel appuie le ruban. La direction des traces enregistrées sur le ruban par rapport à son bord inférieur, généralement pris comme référence, est déterminée par la combinaison vectorielle du mouvement de balayage de la ou des têtes tournantes et du mouvement de translation du ruban lui-même. Pour lire un ruban défilant à une vitesse différente de celle utilisée pour l'enregistrement, et en particulier un ruban arrêté (visionnement d'une image fixe), la tête de lecture doit suivre une trajectoire un peu différente de celle qu'elle suit normalement, pour compenser l'absence totale ou partielle de mouvement de translation du ruban. Une méthode bien connue consiste à opérer avec une tête de lecture non rigidement solidaire du tambour tournant du scanner, de manière à corriger l'erreur de pistage. Ces mouvements de têtes sont très rapides car ils doivent se faire au rythme de la rotation du scanner, avec un retour très brusque pour reprendre la piste suivante. Il ne faut toutefois pas confondre ces mouvements (système AST d'Ampex) avec les déplacements asservis lents, beaucoup moins susceptibles d'être dérangés par les accélérations dont il sera question plus loin. Cette méthode convient bien pour les appareils à peu de têtes et qui opèrent dans un environnement non soumis à des accélérations importantes telles que celles qui existent dans l'aviation.

Si le problème est non de lire à vitesse variable mais d'enregistrer, le positionnement absolu de la tête enregistreuse pose des problèmes très sérieux vu le peu de place et d'énergie disponible dans le scanner, en plus des accélérations radiales (jusqu'à 6000 g) et axiales.

Une autre solution connue de ce problème consiste à incliner l'axe de rotation du tambour tournant du scanner par rapport au tambour fixe comportant la rampe. Cette solution est acceptable pour des angles d'enroulement (wrap) faibles ou modérés.

Dans le dispositif selon la présente invention, le tambour non tournant comportant le guide hélicoidal ou rampe n'est pas une pièce rigide à hélice fixe, mais une pièce dont la position peut être déformée élastiquement de manière à permettre une modification relativement faible de l'angle de l'hélice. Cette déformation est exécutée normalement par des cames ou des servo-moteurs indépendants. Ceci permet d'effectuer la correction de pistage aussi bien à la lecture qu'à l'enregistrement. Il est facile de construire le dispositif de manière qu'il ne soit pas exagérement perturbé par les accélérations et cette construction est sensiblement plus simple et plus fiable que celle à têtes mobiles rapides, surtout si ces dernières sont nombreuses.

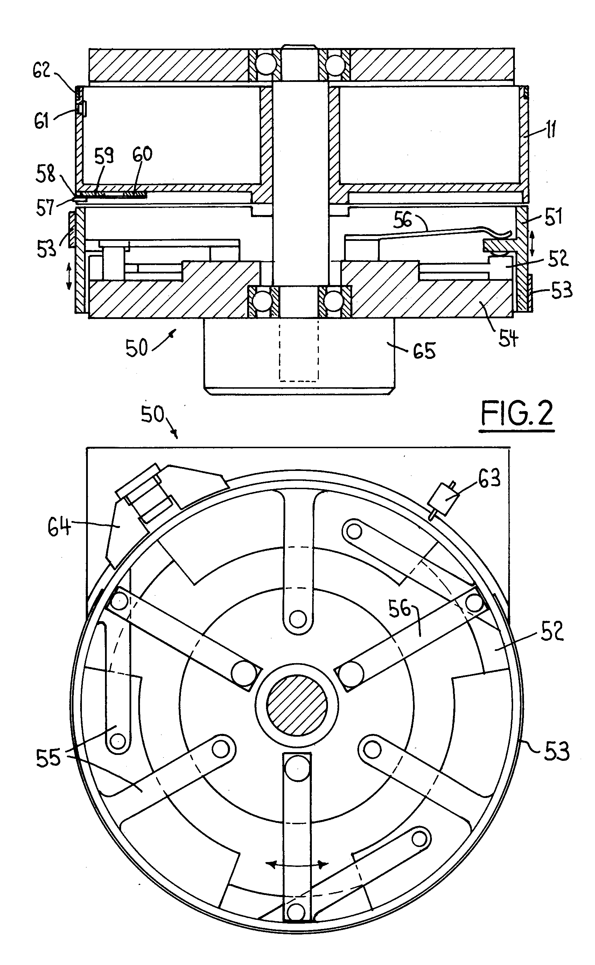

La figure 2 montre un scanner à rampe hélicoidale selon l'invention dont l'angle d'hélice peut être modifié par déformation élastique de la position du tambour fixe du scanner. Le scanner comprend un tambour supérieur tournant 11 sur lequel le ruban est enroulé hélicoidalement et un tambour inférieur non tournant 51 porteur d'une rampe hélicoidale 53. Le tambour 51 peut être déformé élastiquement par la rotation d'une came 52 pour permettre une légère modification du pas de l'hélice, typiquement de 45 micromètre dans le sens des flèches verticales. Cette modification du pas de l'hélice est équivalente à une modification de l'angle d'hélice de la rampe. La figure 2 montre que le tambour tournant 11 porte une roue tachymétrique 62 associée à une tête tachymétrique 64 pour détecter et évaluer la vitesse de rotation du tambour. Des capteurs 61 et 63 délivrent une impulsion par tour de tambour comme impulsion de synchronisation. Le tambour tournant comporte en outre une tête magnétique d'enregistrement ou de lecture 57 avec son support céramique 58. La tête 57 peut être réglée en hauteur par une came de réglage fin 59 et en direction ou en azimuth par une came de réglage fin 60. Des ressorts à lame 56 forcent le tambour porte-rampe 51 à appuyer sur la base 54 et des lames flexibles 55 assurent le centrage et le positionnement angulaire du tambour inférieur porterampe fixe 51. 65 est le moteur d'entraînement du tambour supérieur tournant 11.

La modification de l'angle d'hélice de la rampe demande une correction de la géométrie de défilement du ruban. Dans le dispositif selon l'invention, cette correction est exécutée par une légère modification coordonnée avec le mouvement de la rampe mobile de la direction de l'axe des cabestansguides. Ce réglage est effectué à l'aide d'une came et de son levier de commande non représentés.

Examinons maintenant les conditions liées aux enregistrements à vitesse variable sans modifier notablement la vitesse relative tête-ruban, modification qui entraînerait une modification correspondante difficile à réaliser des circuits d'égalisation. Lors de tels enregistrements, en utilisant la rampe à géométrie variable selon l'invention ou la méthode connue du déplacement axial des têtes pour corriger l'erreur de pistage (AST), il est facile d'enregistrer à une fraction entière de la vitesse nominale (1/2, 1/3, 1/4, etc,), la tête faisant un passage d'enregistrement et un certain nombre de passages à vide.

Pour certaines applications, ces pas (steps) de vitesse sont trop grossiers. Il est possible de les rendre plus fins en commutant les têtes, c'est-à-dire en altérant leur ordre naturel d'entrée en fonction. Il faut alors également les déplacer très légèrement axialement pour corriger l'erreur de pistage.

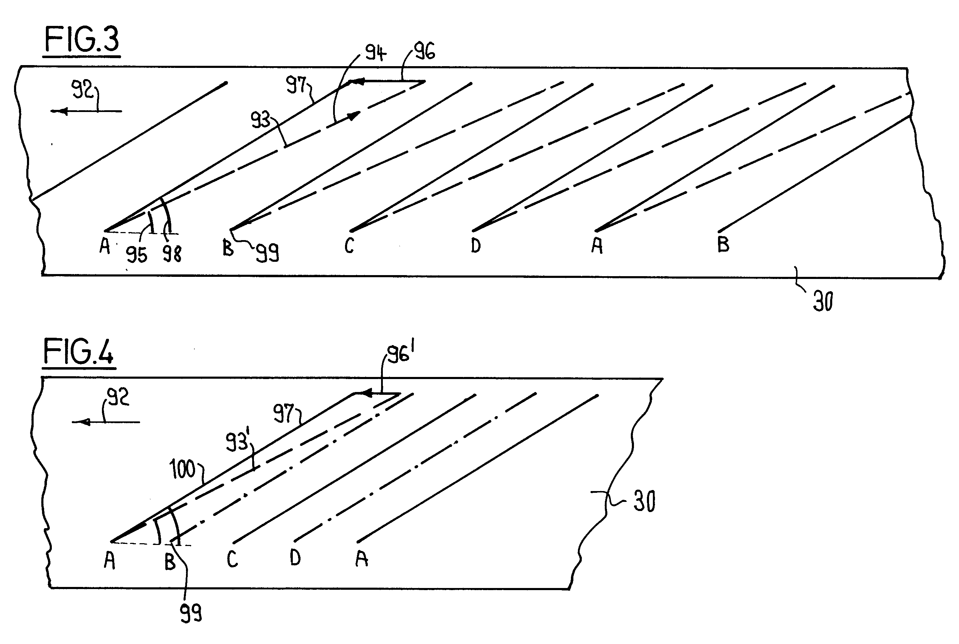

La figure 3 montre la face enregistrée d'un ruban par des têtes tournantes. Le ruban magnétique 30 ou de type différent défile selon la direction 92, de droite à gauche sur la figure. Il est balayé par des têtes A, B, C et D (quatre dans cet exemple) qui, si le ruban était immobile, suivraient le trajet 93 en se déplaçant dans la direction 94 et en faisant avec le bord inférieur du ruban un angle 95. Mais, comme pendant la durée d'un balayage par une tête, le ruban s'est déplacé de la distance 96, la trace inscrite sur le ruban est représentée par 97, cette trace faisant un angle 98 avec le bord de référence du ruban.

Ce sont ces traces 97 sur le ruban qui sont normalisées et lors d'enregistrements à une vitesse différente de déplacement du ruban, la trace enregistrée sur celui-ci doit toujours être identique à celle qui serait gravée dans les conditions nominales.

Supposons maintenant que le ruban défile à une vitesse inférieure à la vitesse nominale. Durant un balayage, l'avance 96 sera plus petite. Pour que la trace 97 sur le ruban ait l'angle normalisé, il faut que le trajet 93 de la tête ait un angle différent de l'angle nominal. Ceci peut être obtenu par un mouvement axial de la tête (méthode AST) ou par un changement de l'angle de guidage par la rampe à géométrie variable selon l'invention.

Pour la suite de l'explication, on peut admettre que pour chaque vitesse de défilement du ruban, on adopte un angle déterminé de la rampe pour que la trace sur ce ruban ait l'angle correct. Il suffit alors, pour la suite de la description, de ne considérer que le point 99 de début de trace.

Dans l'exemple de la figure 3, quatre têtes enregistreuses A, B, C et D attaquent succéssivement le ruban. En un tour de scanner, 4 traces sont enregistrées, une par tête.

Dans l'hypothèse selon laquelle les têtes sont toujours alimentées dans cet ordre (A, B, C et D) pour enregistrer leurs salves (burst), le prochain palier de vitesse qu'il est possible d'obtenir est de 1/2. Le ruban doit alors défiler à la moitié de la vitesse nominale, l'angle de la rampe ou l'angle obtenu artificiellement par un mouvement des têtes serait selon la trace 100 de la figure 4. Sa trace sur un ruban immobile serait 93', différente de la trace 93 de la figure 3. Mais comme l'avance longitudinale est de moitié, soit 96', la trace 100 sur le ruban est de nouveau conforme à la trace normalisée 97.

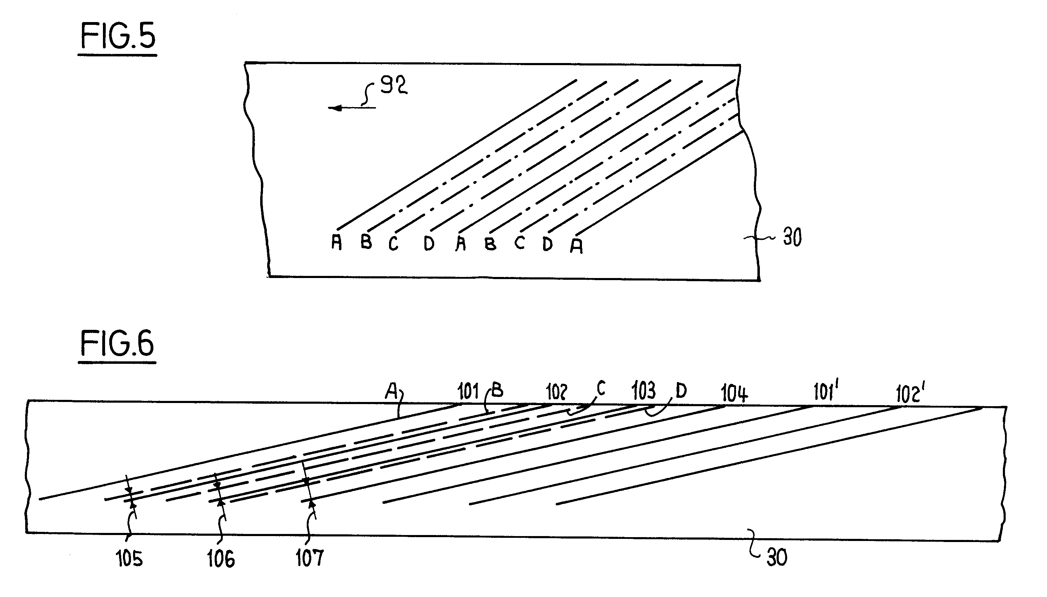

A la vitesse nominale, la trace suivante serait gravée par la tête B qui commence son trajet au point 99 de la figure 3. Toutefois, sur la figure 4, le ruban n'a pas avancé de la valeur 96 de la figure 3 mais de la valeur 96' de la figure 4, c'est-à-dire de la moitié dans notre cas. Si elle avait été active, la tête B aurait commencé son trajet au point 99 de la figure 4, ce qui n'est pas permis car ce trajet empièterait sur le trajet de la tête A. Donc, dans ce cas, la tête B sera désactivée et fera un passage à vide, sans enregistrer. La tête active suivante sera la tête C qui tracera une piste parallèle à celle de la tête A, piste qui, à la vitesse nominale, aurait été tracée par la tête B. Cet exemple montre la possibilité d'enregistrer à la moitié de la vitesse nominale en désactivant une tête sur deux. De manière semblable, il serait possible de travailler à 1/4 de la vitesse nominale en désactivant 3 têtes sur 4. La figure 5 représente ce cas et il est visible que seule la tête A était active. Si la vitesse d'enregistrement devait être 1/8 de la valeur nominale, une seule tête enregistrerait durant un balayage sur deux, etc. Il est donc facile d'obtenir des vitesses d'enregistrement échelonnées par octaves.

Toutefois, si l'on veut obtenir des pas (steps) de vitesse plus petits, il faut commuter les têtes de manière différente. Examinons la figure 6. Il s'agit d'obtenir les traces (101), (102), (103) et (104) de la figure 6 avec une vitesse de défilement comprise entre 1/2 et 1/1 de la valeur nominale, soit 3/4 de la vitesse nominale dans l'exemple illustré. La tête A grave la trace (101) d'une manière conventionnelle. Quand la tête B devrait commencer l'enregistrement sur le ruban, celui-ci n'a avance que des 3/4 de la vitesse nominale, de sorte que la tête ne se trouve pas en bonne position pour graver la trace (102). La figure montre qu'il faut déplacer axialement la tête B sur le scanner de la valeur (105) indiquée en figure 6.

Le fait de déplacer axialement une tête pourrait faire penser que cette méthode est la même que la méthode AST. Il existe cependant une différence fondamentale entre ces deux méthodes. La méthode AST doit être très rapide car le déplacement se fait à chaque tour du scanner, c'est-à-dire en quelques millisecondes, tandis que dans la méthode selon l'invention, ce déplacement se fait une fois pour toutes lors du choix de la vitesse avant l'enregistrement. Il peut être effectué par un système à cames (voir tête magnétique 57 avec came de réglage fin de la hauteur de la tête 59 en figure 2) mues par un servo-moteur, donc capable de supporter les accélérations et vibrations auxquelles est soumis un appareil d'instrumentation embarqué.

La tête B a donc été déplacée de la valeur (105) en figure 6, ce qui lui permet de graver la piste (102). A son tour, la tête C est déplacée de la valeur (106) et elle grave la trace (103). La trace (104) aurait pû être gravée par la tête D déplacée de la valeur (107). Mais cela est inutile car cette trace (104) sera gravée par la tête A qui, ayant fait un tour de scanner, vient coincider exactement avec la trace quand le ruban a avancé de 4 segments de 3/4 de longueur nominale. La tête D aura alors fait un trajet à vide, sans être activée.

Ce qui précède montre que la possibilité selon l'invention de déplacer axialement les têtes graveuses selon la vitesse désirée de défilement du ruban permet de réaliser des enregistrements avec des pas plus petits qu'un octave. Le déplacement axial étant effectué une fois pour toutes avant l'enregistrement, en fonction de la vitesse de défilement du ruban. D'autre part, l'angle de la trace sur le ruban est déterminé par l'angle de la rampe en fonction de la vitesse de défilement du ruban. Ces deux mesures conduisent à une construction du dispositif susceptible de résister avantageusement à des accélérations et vibrations relativement élevées.

## Revendications

1. Dispositif d'enregistrement/reproduction de signaux plus particulièrement par voie magnétique, comprenant au moins une tête tournante (57) pour enregistrer/reproduire lesdits signaux par balayage hélicoidal, comprenant:

   un support flexible (30) enroulé sur des bobines ouvertes ou dans une cassette (15), ledit support ayant une pluralité de pistes sur lesquelles lesdits signaux sont enregistrés/lus par ladite tête tournante (57) , (57),

   un scanner (50) avec un tambour tournant (11) porteur d'au moins une tête (57) et autour duquel le support flexible (30) est enroulé et se déplace d'un mouvement hélicoidal, le scanner (50) comprenant en outre un tambour fixe (51) porteur d'une rampe hélicoidale (53) pour guider latéralement le support flexible (30) lors de son déplacement hélicoidal autour du tambour tournant (1),

   caractérisé en ce que le tambour fixe (51) est lié de manière élastique à la base (54) du dispositif par des moyens flexibles (55), et par le fait qu'une came (52) agissant sur ledit tambour fixe (51) permette de faire varier l'inclinaison dudit tambour fixe (51) et en conséquence l'inclinaison de l'axe dudit tambour, dans le but de modifier le pas, resp. l'angle de l'hélice de la rampe hélicoidale, afin de corriger toute erreur de balayage des pistes liée à une modification de la vitesse de défilement du support flexible (30).

2. Dispositif selon la revendication 1, caractérisé en ce qu'il comporte des cabestans (10,16; 12,17) et des moyens (39,40) pour ajuster l'inclinaison de l'axe desdits cabestans relativement à l'axe dudit scanner, (50) pour ajuster de manière optimale la géométrie de défilement du support flexible (30).

3. Dispositif selon la revendication 1, caractérisé par une pluralité de têtes d'enregistrement/lecture (A,B,C,D) destinées à l'enregistrement sur un support flexible (30) à des vitesses différentes de la vitesse nominale, des moyens pour activer sélectivement les têtes (A,B,C,D) et des moyens (57,59) pour produire un déplacemetn axial des têtes, effectué avant l'enregistrement et dont la grandeur dépend de la vitesse d'enregistrement désirée, afin de faire coincider le trajet des têtes avec celui des pistes (100 - 104) normalisées sur le support flexible (30), pour permettre des enregistrements à des vitesses ayant entre elles des écarts relatifs plus faibles que des octaves.

## Claims

1. Signals recording/reproducing device, more particularly by magnetic means, comprising at least a revolving head (57) for registrating/reproducing said signals by helical scanning, comprising:

a flexible support (30) wound up on open coils or within a tape cartridge (15), said support having a plurality of tracks upon which said signals are recorded/read by said revolving head (57),

a scanner (50) with a revolving drum (11) bearing at least one head (57) and around which the flexible support (30) is wound up and is helically displaced, the scanner (50) further comprising a fixed drum (51) bearing a helical ramp (53) for laterally guiding the flexible support (30) during its helical displacement around the revolving drum (11),

characterized in that the fixed drum (51) is elastically connected to the base 54) of the device by flexible means (55) and by the fact that one cam (52) acting on said fixed drum (51) permits to cause the inclination of said fixed drum to vary and consequently the inclination of the axis of said drum, in order to modify the step, resp. the angle of the helix of the helical ramp for correcting any scanning error of the tracks bound to a modifiction of the running speed of the flexible support (3o).

2. Device according to claim 1, characterized in that it comprises capstans (10,16;12,17) and means (39,40) for optimally adjusting the inclination of the axis of said capstans relatively to the axis of said scanner (50) in order to optimally adjust the running geometry of the flexible support (30).

3. Device according to claim 1, characterized by a plurality of recording/reproducing heads (A,B,C,D) provided for recording on a flexible support (30) at speeds different from the nominal speed, means for selectively activating the heads (A,B,C,D) and means (57,59) for producing an axial displacement of the heads, effected before the recording and the value of which depending on the desired recording speed for causing the path of the heads to coincide with the one of the normalized traks (100 - 104) on the flexible support, for permitting recordings at speeds having between themselves relative gaps smaller than one octave.

## Patentansprüche

1. Vorrichtung zur Aufzeichnung/Wiedergabe von Signalen, insbesondere auf magnetischem Weg, mit mindestens einem drehenden Kopf (57) zur Aufzeichnung/Wiedergabe der Signale durch schraubenförmige Abtastung, aufweisend:

einen biegsamen Träger (30), aufgerollt auf offenen Spulen oder in einer Kassette (15), der eine Anzahl von Spuren aufweist, auf welchen die Signale vom genannten drehenden Kopf (57) aufgezeichnet/gelesen werden,

einen Abtaster (50) mit einer drehenden Trommel (11), welche mindestens einen Kopf (57) trägt, und um welche der biegsame Träger (30) geschlungen ist und sich schraubenförmig bewegt, wobei der Abtaster (50) ausserdem eine feste Trommel (51) aufweist, die eine schraubenförmige Rampe (53) zur seitlichen Führung des biegsamen Trägers (30) während dessen schraubenförmiger Bewegung um die drehende Trommel (11) trägt,

dadurch gekennzeichnet, dass die feste Trommel (51) durch flexible Mittel (55) elastisch mit dem Boden (54) der Vorrichtung verbunden ist, und dass ein auf die feste Trommel (51) wirkender Nocken (52) eine Veränderung der Neigung dieser festen Trommel (51) und damit der Neigung der Achse dieser Trommel erlaubt, um zur Korrektur von Abtastfehlern der Spuren infolge von Aenderungen der Laufgeschwindigkeit des biegsamen Trägers (30) die Steigung bzw. den Schraubungswinkel der schraubenförmigen Rampe zu ändern.

2.    Vorrichtung nach Anspruch 1, dadurch gekennzeichnet, dass sie Antriebswellen (10,16; 12,17) und Mittel (39,40) zur Einstellung der Achsenneigung dieser Antriebswellen in bezug auf die Achse des Abtasters (50) aufweist, um die Laufgeometrie des biegsamen Trägers (30) optimal einzustellen.

3.    Vorrichtung nach Anspruch 1, gekennzeichnet durch eine Mehrzahl von Aufzeichnungs-/Leseköpfen (A,B,C,D), welche zur Aufzeichung auf einen biegsamen Träger (30) bei von der Nominalgeschwindigkeit abweichenden Geschwindigkeiten vorgesehen sind, Mittel zur wahlweisen Aktivierung der Köpfe (A,B,C,D) und Mittel (57,59) zur Erzeugung einer Axialverschiebung der Köpfe, welche vor der Aufzeichnung ausgeführt wird und deren Grösse von der gewünschten Aufzeichnungsgeschwindigkeit abhängt, um den Weg der Köpfe mit demjenigen der normierten Spuren (100 - 104) auf dem flexiblen Träger in Uebereinstimmung zu bringen und Aufzeichnungen bei Geschwindigkeiten zu ermöglichen, die weniger weit als eine Oktave auseinanderliegen.

# FIG.1

FIG.2

## FIG.3

## FIG.4

EP 0 319 530 B1

FIG.5

FIG.6